# EUROPEAN PATENT APPLICATION

(11) **EP 4 465 461 A1**
(43) Date of publication of application: **20.11.2024**
(21) Application number: 24173294.0
(22) Date of filing: 30.04.2024
(51) Int. Cl.: H02B 1/30, B66C 1/66

(54) **LIFTING AND HANDLING ACCESSORY, CABINET FOR AN ELECTRICAL PANEL COMPRISING SAID ACCESSORY, AND LIFTING AND HANDLING KIT**

(30) Priority: 17.05.2023 IT 202300009981
(71) Applicant: EIQ INDUSTRIAL S.R.L., 36015 Schio (VI) (IT)
(72) Inventor: DI LELIO, Diego, I-36015 Schio, VICENZA (IT)
(74) Representative: Busana, Omar

(57) **Abstract**

A lifting and handling accessory (12) comprises a box-like element (14) and a connecting bolt (15) comprising a screw (30) and a nut (19). The box-like element (14) comprises a bottom (16) and side walls (18, 20, 22, 24), one of the side walls (22), said connecting wall, is arranged with a hole (26) adapted to be engaged by the stem (28) of the screw (30) of the connecting bolt (15). Around the hole (26) an anti-rotation collar (32) is arranged, protruding outwards of the box-shaped element (14). The side wall (18), opposite the connecting wall (22), is arranged with a first slot (18).

## Description

### FIELD OF APPLICATION

The present invention relates to a lifting and handling accessory and a cabinet for an electrical panel comprising said accessory and a lifting and handling kit for a cabinet.

### PRIOR ART

As is well known, the problem of lifting machinery in the industrial sector, and in particular cabinets for electrical panels, is particularly acute.

A first method that is used is that which provides for the use of eye bolts, i.e. rings made of a metallic material which are fixed by screwing to a portion of the cabinet. Eye bolts are suitable for being engaged by metallic or textile cables, or by hooks for lifting and/or moving machines or cabinets for electrical panels.

Once the cabinet has been moved, the eye bolts may be left on the cabinet, or they may be removed by unscrewing.

In alternative embodiments, cabinets are known to be lifted from below, for example by means of a forklift. For this purpose, the base of the cabinets must be reinforced so that they may be successfully engaged by the forks of the forklift.

The prior art, whilst widely used and appreciated, is not without drawbacks.

For example, in the case of detachable eye bolts, if purchased from a supplier, the cost thereof is high, and the production thereof may not be carried out internally by a company that manufactures cabinets for electrical panels insofar as it is an element of metal carpentry that requires completely different production machines. An eye bolt is in fact made from a steel bar which is generally cut, bent over and welded, and may not therefore be made using machines that are suitable for bending metal sheets such as those used in companies that produce cabinets for electrical panels.

As regards the solution wherein the cabinet is raised by means of a forklift, as mentioned above, reinforcement is arranged at the base of the cabinet. However, since the cabinet is made of metal and internally it has a particularly solid back for supporting electrical equipment that is arranged thereinside, it is already heavy, if one adds to this a reinforcement of the base so that it can be engaged by the forklift, there is a further increase in the total weight of the cabinet. Furthermore, such further reinforcement may not be removed once the cabinet has been positioned and possibly reinstalled for subsequent handling requirements.

### DISCLOSURE OF THE INVENTION

There is therefore a need to resolve the disadvantages and limitations mentioned with reference to the prior art.

The need therefore is felt to provide a lifting and handling accessory which may be produced internally by a company that manufactures cabinets for electrical panels, in particular using machines that are already present in the company.

In addition, there is a need to provide a lifting and handling accessory that is less expensive than traditional eye bolts.

Furthermore, the need is felt to provide a lifting and handling accessory that does not represent a significant increase in the weight of the cabinet.

Furthermore, the need is felt to provide a lifting and handling kit wherein an accessory is provided to be installed in place of the lifting accessory when said accessory is removed.

These requirements are met at least in part by a lifting and handling accessory according to claim 1, a cabinet for an electrical panel according to claim 10, and a lifting and handling kit for a cabinet for an electrical panel according to claim 12.

### DESCRIPTION OF THE DRAWINGS

Further features and advantages of the present invention will become more apparent from the following detailed description of preferred, non-limiting embodiments thereof, wherein:
- Figure 1 shows, in schematic form, an exploded perspective view of a lifting and handling accessory according to a possible embodiment of the present invention;
- Figure 2 shows, in schematic form, a perspective view of a lifting and handling accessory according to a possible embodiment of the present invention;
- Figure 3 shows, in schematic form, a side view of a lifting and handling accessory according to a possible embodiment of the present invention;
- Figure 4 shows, in schematic form, a plan view from above of a lifting and handling accessory according to a possible embodiment of the present invention;
- Figure 5 shows, in schematic form, a plan view from above of a component of a lifting and handling accessory according to a possible embodiment of the present invention, before the bending step;
- Figures 6 and 7 show in schematic form cross-sectional views of a component of a lifting and handling accessory according to a possible embodiment of the present invention;
- Figure 8 shows, in schematic form, a cabinet for an electrical panel according to a possible embodiment of the present invention;
- Figure 9 shows, in schematic form, an enlarged portion of the cabinet for an electrical panel shown in Figure 8;
- Figure 10 shows, in schematic form, a view of the inside of a cabinet for an electrical panel according to a possible embodiment of the present invention;
- Figure 11 shows, in schematic form, a view of the inside of a cabinet for an electrical panel according to a possible embodiment of the present invention; and
- Figure 12 shows, in schematic form, a perspective view of a component of a lifting and handling kit according to a possible embodiment of the present invention.

Elements or parts of elements common to the embodiments described hereinafter will be indicated with the same numerical references.

### DETAILED DESCRIPTION

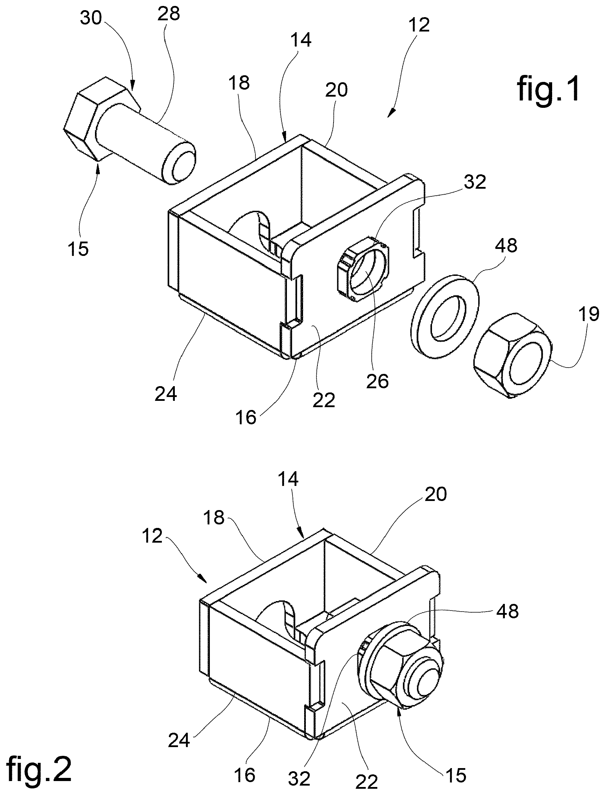

Figures 1 and 2 show a lifting and handling accessory globally denoted using the reference numeral 12.

The lifting and handling accessory 12 (hereinafter also referred to as the accessory 12) comprises a box-like element 14 and a connecting bolt 15 comprising a screw 30 and a nut 19.

The box-like element 14 comprises a bottom 16 and side walls 18, 20, 22, 24, wherein one of the side walls 22, named connecting wall, is arranged with a hole 26 adapted to be engaged by the stem 28 of the screw 30 of the connecting bolt 15.

Around the hole 26 an anti-rotation collar 32 is arranged, protruding outwards of the box-like element 14.

The side wall 18, which is opposite the connecting wall 22, is arranged with a first slot 18.

Thus, the accessory 12 may be fixed to a cabinet for an electrical panel through the anti-rotation collar 32, which in use is inserted into a hole 70 in the cabinet 50, and is locked in position by means of the connecting bolt 15.

According to one possible embodiment, the cross-section of the anti-rotation collar 32 and the respective hole in the cabinet for an electrical panel may be counter-shaped, and in particular suitable for preventing mutual rotation.

For example, in the embodiment shown in Figure 1, the cross-section of the anti-rotation collar is seen to be substantially hexagonal. In any case, other shapes are possible, such as rectangular, square, etc., provided that they are suitable by means of a counter-shaped coupling for preventing rotation. In this regard, embodiments may also be provided wherein at least one radial protrusion on the anti-rotation collar may be obtained.

According to one possible embodiment, the box-like element 14 may be made from a shaped metal sheet, which is bent, and welded at least partially along the edges.

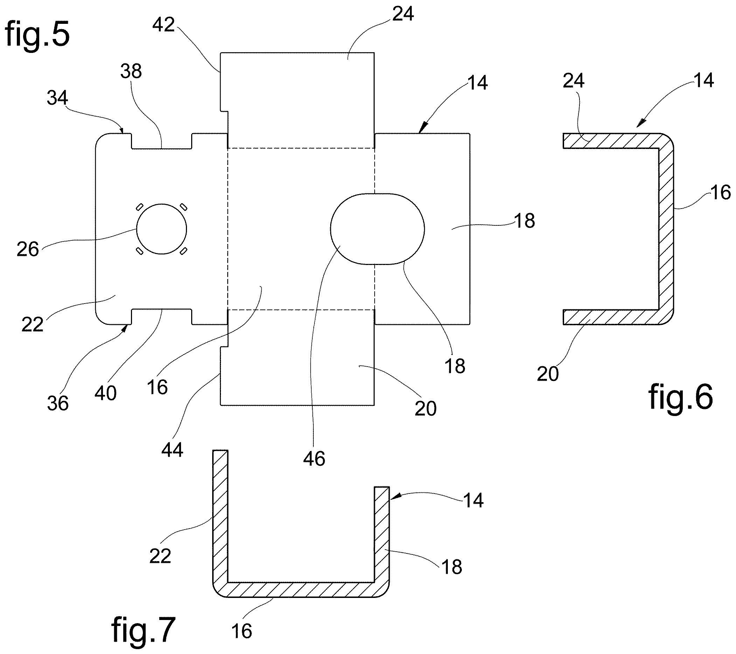

As may be seen in Figure 5, the box-like element may initially be obtained from a metal sheet that is suitably cut in order to subsequently produce the box-like element by means of bending. In this regard, Figures 6 and 7, which show cross-sections of the box-shaped element after bending.

As seen in Figure 5 and 2, the edges 34, 36 of the connecting side wall 22 which couple with the edges of the respective side walls 24, 20 may comprise recesses 38, 40 adapted to couple with respective protrusions 42, 44 arranged on the side walls 24, 20. Advantageously, this structure makes it possible to strengthen the box-shaped element.

According to one possible embodiment, which may be seen for example in the example in Figure 5, the first slot 18 may have a substantially semicircular shape, with a maximum diameter at the edge between connecting side wall 22 and bottom wall 16. In use, the function of the first slot 18 is that of being adapted to be engaged by the lifting and handling means.

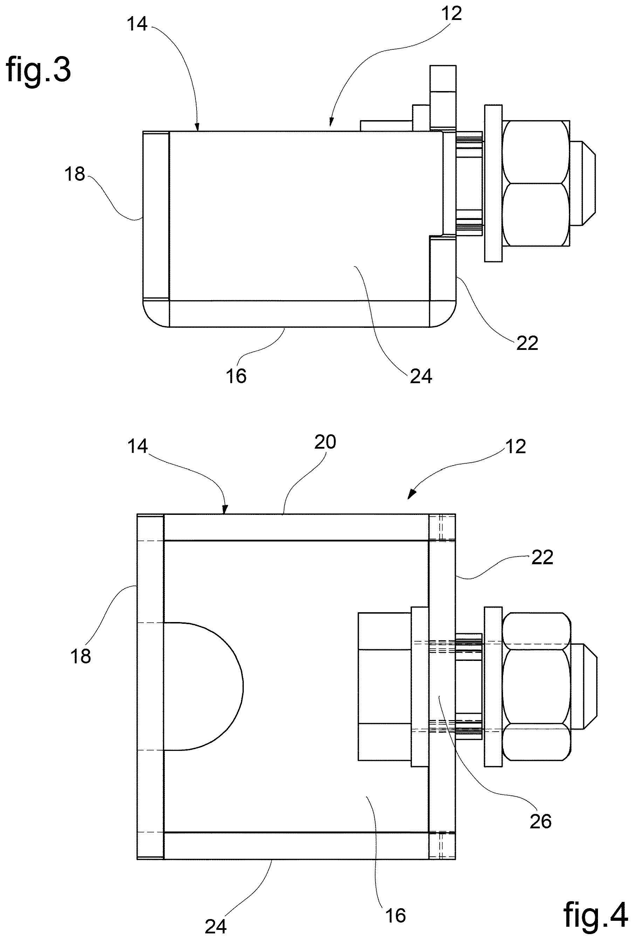

As seen in Figures 4 and 5, the box-like element 14 may be arranged with a second slot 46, adjacent to the first slot 18, and arranged at the bottom wall 16.

According to one possible embodiment, the second slot 46 may have a substantially semicircular shape, with a maximum diameter at the edge between the connecting side wall 22 and the bottom wall 16.

As may be seen in Figure 5, the first slot 18 and the second slot 46 may substantially form an ellipse when the box-shaped element is in an unbent condition.

The box-like element 14 may be made from a metal sheet 5 mm thick, such as steel.

According to one possible embodiment, the lifting and handling accessory 12 may comprise a washer 48 adapted to couple with the stem 28 of the screw 30, and interposed in use between the cabinet and bolt.

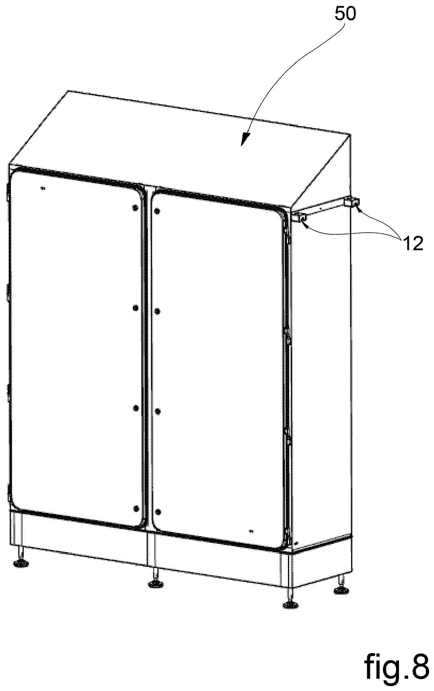

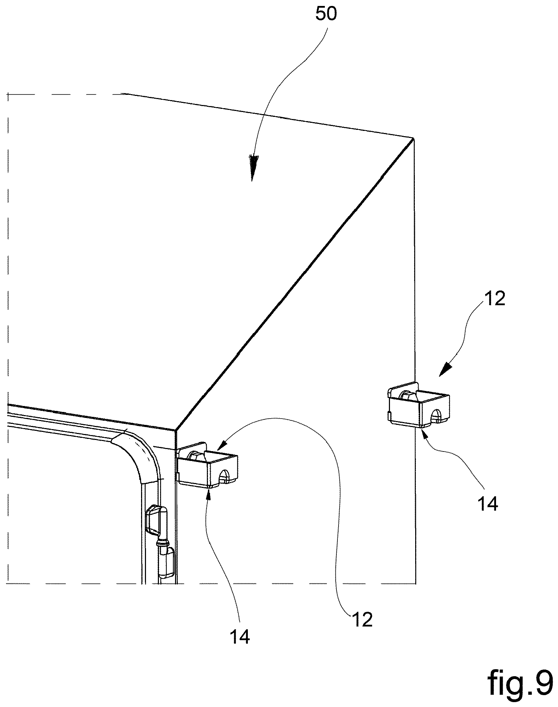

As seen in Figures 8 and 9, the cabinet for an electrical panel 50 comprises at least one lifting and handling accessory 12, and advantageously four, two on each side, near the upper end.

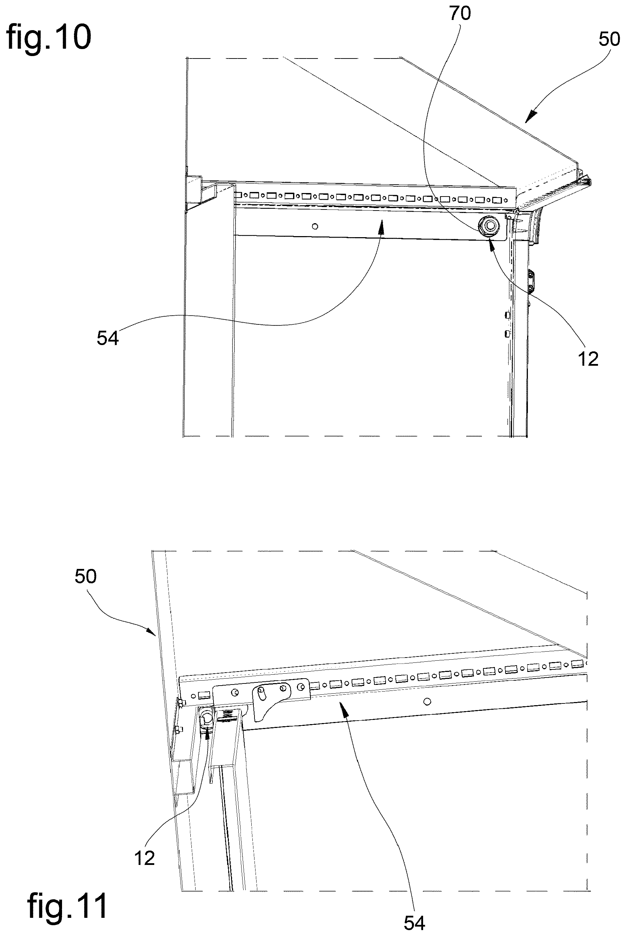

As seen in Figures 10 and 11, the holes for the lifting and handling accessory 12 may be arranged in a reinforced zone 54 of the electrical panel cabinet 50. In particular, the holes may be arranged at stiffening crosspieces.

According to a further aspect, the present invention relates to a lifting and handling kit comprising a lifting and handling accessory 12, as just described, and a cap 52 adapted to replace the lifting and handling accessory 12 on the electrical panel cabinet 50.

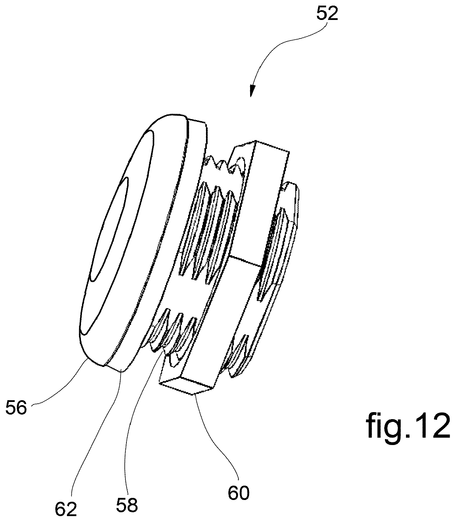

As seen in the example of Figure 12, the cap 52 may comprise a head 56 from which a threaded stem 58 protrudes, an abutment nut 60 and a gasket 62 made of polymeric material, adapted to be interposed in use between said head 56 and said cabinet 50.

In other words, according to one aspect of the present invention, once the lifting and handling accessory has been used it may be replaced with the cap. Advantageously, the cap is provided with a gasket 62 thereof so that there are no facing metal-to-metal surfaces exposed to the environment and therefore the cabinet for electrical panels may also be used effectively according to very restrictive hygienic standards.

The advantages that may be achieved with the lifting and handling accessory, with the cabinet for an electrical panel comprising said accessory, and with the lifting and handling kit for a cabinet are now apparent.

Therefore, a lifting and handling accessory has been provided which may be produced internally by a company that manufactures cabinets for electrical panels, in particular using machines that are already present in the company.

In addition, a lifting and handling accessory has been provided that is less expensive than traditional eye bolts.

Furthermore, a lifting and handling accessory has been provided that does not represent a significant increase in the weight of the cabinet.
Furthermore, a kit comprising a lifting and handling accessory and a cap has been provided, with which, once the cabinet has been moved, it is possible to replace the accessory with the cap. Advantageously, in the case of a cap with a gasket, the cabinet may also comply with the most stringent hygienic regulations.

A person skilled in the art will be able to make modifications to the embodiments described above and/or substitute described elements with equivalent elements, in order to satisfy particular requirements, without departing from the scope of the accompanying claims.

## Claims

1. Lifting and handling accessory (12) comprising a box-like element (14) and a connecting bolt (15) comprising a screw (30) and a nut (19), said box-like element (14) comprising a bottom (16) and side walls (18, 20, 22, 24), one of said side walls (22) named connecting wall being arranged with a hole (26) adapted to be engaged by the stem (28) of the screw (30) of said connecting bolt (15), an anti-rotation collar (32) being arranged around said hole (26), protruding outwards of said box-like element (14), wherein the side wall (18), opposite said connecting wall (22) being arranged with a first slot (18).

2. Lifting and handling accessory (12) according to claim 1, **characterised in that** said box-like element (14) is made of a shaped, bent, and at least partially welded sheet along the edges.

3. Lifting and handling accessory (12) according to any one of the preceding claims, **characterised in that** the edges (34, 36) of the connecting side wall (22) which couple with the edges of the respective side walls (24, 20), comprise recesses (38, 40) adapted to couple with respective protrusions (42, 44) arranged on the side walls (24, 20).

4. Lifting and handling accessory (12) according to any one of the preceding claims, **characterised in that** said first slot (18) has a substantially semicircular shape, with maximum diameter at the edge between connecting side wall (22) and bottom wall (16).

5. Lifting and handling accessory (12) according to any one of the preceding claims, **characterised in that** it comprises a second slot (46), adjacent to the first slot (18), and arranged at said bottom wall (16).

6. Lifting and handling accessory (12) according to the preceding claim, **characterised in that** said second slot (46) has a substantially semicircular shape, with maximum diameter at the edge between the connecting side wall (22) and the bottom wall (16).

7. Lifting and handling accessory (12) according to any one of the preceding claims, **characterised in that** said box-like element (14) is made of a 5 mm thick sheet.

8. Lifting and handling accessory (12) according to any one of the preceding claims, **characterised in that** said box-like element (14) is made of steel.

9. Lifting and handling accessory (12) according to any one of the preceding claims that it comprises a washer (48) adapted to couple with the stem (28) of said screw (30) .

10. Cabinet for electrical panel (50) comprising at least one lifting and handling accessory (12) according to any one of the preceding claims.

11. Cabinet for electrical panel (50) comprising at least one lifting and handling accessory (12) according to the preceding claim, **characterised in that** said lifting and handling accessory (12) is arranged in a reinforced zone (54) of said electrical panel cabinet (50) .

12. Lifting and handling kit comprising a lifting and handling accessory (12) according to any one of claims 1-9 and a cap (52) adapted to replace said lifting and handling accessory (12) on an electrical panel cabinet (50) .

13. Lifting and handling kit according to the preceding claim, **characterised in that** said cap (52) comprises a head (56) from which a threaded stem (58) protrudes, an abutment nut (60) and a gasket (62) made of polymeric material, adapted to be interposed in use between said head (56) and said cabinet (50).
